# EUROPEAN PATENT SPECIFICATION

(11) **EP 2 225 127 B1**
(45) Date of publication and mention of the grant of the patent: **03.04.2013**
(21) Application number: 08872663.3
(22) Date of filing: 18.12.2008
(51) Int. Cl.: C06D 5/06, B60R 21/264

(54) **AIRBAG MODULE FOR A MOTOR VEHICLE**
AIRBAGMODUL FÜR EIN MOTORFAHRZEUG
MODULE DE COUSSIN GONFLABLE POUR VEHICULE AUTOMOBILE

(30) Priority: 21.02.2008 DE 102008010740; 30.04.2008 DE 102008022342; 05.06.2008 US 129107; 05.06.2008 US 129106
(43) Date of publication of application: 08.09.2010
(73) Proprietor: Takata AG, 63743 Aschaffenburg (DE)
(72) Inventor: WINDHAUSEN, Björn, 75328 Schömberg (DE); SCHREIBER, Christian, 16356 Ahrensfelde (DE); HÄNSEL, Michael, 16562 Ahrensfelde (DE); PFEIFER, Sascha, 10409 Berlin (DE)
(74) Representative: Müller, Wolfram Hubertus
(86) International application number: PCT/EP2008/067832
(87) International publication number: WO 2009/103380

(56) References cited:
- EP-A1- 1 067 168
- WO-A1-01/96493
- WO-A1-2007/141335
- DE-A1- 19 700 713
- DE-C1- 19 753 074
- US-A- 3 810 655
- US-B1- 6 582 622
- D. S. DAVIS: "Nomograph for Surface Tension of Ethyl Alcohol?Water Mixtures" INDUSTRIAL AND ENGINEERING CHEMISTRY, [Online] vol. 32, no. 12, 1 December 1940 (1940-12-01), XP002524208 Retrieved from the Internet: URL:http://pubs.acs.org/doi/pdf/10.1021/ie 50372a015> [retrieved on 2002-05-01]

## Description

The invention relates to an airbag module for a motor vehicle according to the preamble of claim 1 and a method for cooling a gas used to inflate an airbag in an airbag module for a motor vehicle by means of a coolant according to the preamble of Claim 13.

An airbag module is known from DE 10 2006 010 953 A1 in which a coolant is used in a cooling device for cooling a gas to be used to inflate an airbag. However, the coolant is not specified in any greater detail.

A gas generator with integral cooling device as described in the preamble of claim 1 is known from WO 2007/141 335 A1, on which glycol (ethylene glycol, 1,2-ethanediol) is used as coolant. 1,2-Ethanediol does have unfavorable toxicological properties, however.

DE 22 36 380 A1 reveals the use of water and aqueous solutions of salts as coolant in gas generating devices.

The use of liquid halogenated hydrocarbons such as Freon 11 (trichlorofluoromethane) and Freon 12 (dichlorodifluoromethane) is also known from DE 21 53 639 A1. Halogenated hydrocarbons have unfavorable environmental properties, however.

It is an object of the present invention to provide an airbag module for a motor vehicle in which a coolant with favorable toxicological and particularly environmental properties is used.

This object is achieved with an airbag module having the features of claim 1. Such an airbag module for a motor vehicle comprises an airbag which is inflatable with gas to protect an occupant. In addition, in the airbag module there are provided a gas generator to generate the gas provided to inflate the airbag and an additional cooling device, which comprises a reservoir for storing a coolant, which reservoir can be an openable reservoir. The reservoir may be opened, for example on or after inflation of the airbag, such that the coolant can come into contact with the gas used to inflate the airbag to cool said gas.

According to the invention, the coolant comprises at least one propanediol and the inflated airbag defines an interior of the airbag that has a certain volume, wherein the cooling device is adapted and provided to inject between 0,15 and 1,0 ml coolant for each liter of the airbag volume into the interior of the airbag in order to cool the gas therein.

Possible propanediols include, for example, 1,2-propanediol and 1,3-propanediol, with, in particular, the use of 1,2-propanediol being provided. Mixtures of 1,2-propanediol and 1,3-propanediol are also conceivable.

In order to keep the use of the propanediol material as low as possible and at the same time to ensure that the coolant has good viscosity properties, in one variant the coolant comprises a mixture of 1,2-propanediol and water. It is provided here in one variant that the coolant is exclusively composed of water and 1,2-propanediol (propyleneglycol, C₃H₈O₂).

In one development, the mass ratio of 1,2-propanediol to water is approx. 0.5 to approx. 5, in particular approx. 0.75 to approx. 3 and very particularly approx. 1 to approx. 2.5. In these mixture ratios, mixtures of polypropyleneglycol and water which can be used particularly readily can be produced, said mixtures having a sufficiently low freezing point and not being too viscous and at the same time readily vaporizing when they come into contact with a hot gas. Basically, the vaporization of the coolant, for which purpose enthalpy of vaporization has to be applied, causes energy to be extracted from the hot gas which serves as the energy provider. That is to say, the vaporization of the coolant cools the hot gas which is used to inflate the airbag. In this case, mixtures of 1,2-propanediol and water require a sufficient quantity of enthalpy of vaporization such that the desired cooling effect occurs in a favorable manner.

In a further development it is provided that a further substance for lowering the freezing point of the coolant is used. In this case the coolant can be composed of at least two substances if no water is used and of at least three substances if water is also contained in the coolant. Particularly, in this case, it is possible in one variant - depending on the quantity of further substance added for lowering the freezing point - to lower the proportion of propanediol or a corresponding substance in the coolant to a very low value or to even allow it to drop toward zero (when propanediol is used as a coolant). The further substance for lowering the freezing point may serve to maintain a liquid state of aggregation of the coolant even at temperatures which lie significantly below the freezing point of pure water. The coolant and consequently the entire airbag module therefore remain operable even at low temperatures, such as prevail, for example, during winter. At the same time, the further substance for lowering the freezing point should be selected to the effect that it does not substantially affect vaporization of the remaining substances of the coolant and, if appropriate, can itself easily be vaporized. The further substance should also have similarly good toxological properties to the propanediol (or an alternative substance of the coolant) used in order to keep the effects of skin contact or inhalation of aerosol, which is in principle possible after an airbag is triggered, to a level which is not damaging to the health of the vehicle occupant.

In one variant, the coolant comprises at least one additive in addition to the cooling substance, that may be an emulsifier or a surfactant or a foam inhibitor or a substance for reducing or preventing mist formation on vaporisation of the coolant.

The additive (further substance) may also be a biocide. Examples of biocides are fungicides, bactericides, algicides, microbicides and virucides. Mixtures of the above-stated additives are likewise conceivable. The additive may also be selected from a group which constitutes a sub-combination of the above-stated classes of substances or the substances contained therein.

Suitable substances for lowering freezing point are sugars or sugar substitutes.

In this respect, in one variant, a sugar or a sugar substitute is used as the further substance for lowering the freezing point. Sugar or sugar substitutes can generally be classified as toxicologically favorable since they are also used as food additives.

It is possible, for example, to use sucrose, sorbitol, xylitol, maltitol, lactitol, isomalt, fructose, erythritol, cyclamate, glucose and/or Acesulfame K as sugar or sugar substitute. Mixtures of these substances are likewise possible.

The additive (further substances) may also be adapted for protecting those parts of the airbag module from corrosion, that can come into contact with the coolant, especially the reservoir and/or a nozzle of the reservoir.

The freezing point of the coolant is lowered in relation to the freezing point of pure water both by means of the coolant (for instance propanediol) used and, if appropriate, by the further substance used for lowering the freezing point. In one variant here, the freezing point of the coolant is at or below approx. -40°C, in particular at or below approx. -38°C, in particular at or below approx. -35°C and very particularly at or below approx. -30°C. This ensures that, even at low external temperatures, the operability of the airbag module or the efficiency of the cooling of the escaping hot gases is not affected.

When the coolant vaporizes as a consequence of contact with the hot gases which are generated to inflate the airbag, a mist formation may in principle occur. In order to keep said mist formation to as low a level as possible or even to entirely avoid it, in one development of the airbag module an additive for reducing or avoiding mist formation is added to the coolant (see above). An example of a suitable additive of this type is a mixture of polyethylene glycol and silicon dioxide, in particular with more than 95% by weight of polyethylene glycol and less than 3% by weight of silicon dioxide, for example as known under the trade name POLYOX™ WSR 301.

To make use of the coolant safe, in one variant the cooling substance has properties such that inhalation of the cooling substance, for example if the coolant containing the cooling substance is vaporized, by a vehicle occupant is toxicologically safe. Consequently, corresponding vaporization of the coolant must not result in formation of any toxic compounds from the cooling substance. The cooling substance must not in itself exhibit toxic properties, either. Inhalation of the cooling substance or of the coolant may be deemed to be toxicologically safe provided limit values prescribed by legislation or a special interest group or a comparable organization are not exceeded.

In a further development, in addition to the cooling substance, the coolant comprises a gas in dissolved form. It is thereby possible, upon opening of the reservoir, which stores the coolant, and upon concomitant modification of the pressure acting on the coolant, to achieve outgassing of the gas dissolved in the coolant. In addition, by increasing the temperature of the coolant as a consequence of the process of cooling the gas used to inflate the airbag, a further physical possibility is provided for achieving outgassing of the gas contained in dissolved form in the coolant. In the process, outgassing of the gas previously contained in dissolved form in the coolant may take place suddenly or abruptly, such that swirling of the coolant occurs. This brings about better dispersion of the coolant and thus more effective cooling of the gas used to inflate the airbag, i.e. a metastable state of the coolant is provided in one development of the invention due to the presence of a readily outgassable gas in dissolved form.

In one variant, the gas present in dissolved form in the coolant is carbon dioxide (CO₂).

In order to achieve particularly effective cooling of the gas used to inflate the airbag, in one development the coolant is substantially liquid at room temperature. It may be present, for example as a solution, emulsion or dispersion. A liquid pure substance is also provided as coolant for the purposes of the present invention. In order to allow good usability of the coolant under constant conditions, when the coolant consists of a mixture of more than one substance, it is always so formulated that the individual constituents of the coolant do not segregate. If the coolant contains water and oil for example, the addition of an emulsifier or of a surfactant to maintain a stable emulsion of the oil in water is advantageous, in order to counteract segregation of the two substances. Suitable additives allow the provision of a stably storable coolant. Certain substances, which are miscible together in any desired ratio, do not require any additives in order to counteract segregation of these substances. This depends on the respective individual properties of the substance to be used as cooling substances.

If the coolant is in liquid form, it vaporizes on contact with the hot gas used to inflate the airbag. For transition from the liquid to the gaseous state of matter, enthalpy of vaporization is required, which draws a large amount of energy from the hot gas. In this way, particularly efficient cooling of the gas used to inflate the airbag is achieved.

It is advantageous in this respect for the coolant to be present in the range from approx. -40 °C to approx. +90 °C (for individual areas of application also up to approx. +107 °C) in the liquid state of matter. In addition to a freezing point of the coolant of approx. -40 °C, a freezing point is also provided of approx. -38 °C or below, in particular of approx. -35 °C or below, and very particularly of approx. -30 °C or below.

Likewise, in addition to a boiling point of the coolant of approx. +90 °C, a boiling point is also provided for the coolant of approx. +95 °C or above, in particular of approx. +100 °C or above, in particular of approx. +105 °C or above and very particularly of approx. +107 °C or above.

In one variant, the cooling substance used has the same freezing and boiling points as the coolant. In this case, the phase transition points of the cooling substance need not then be influenced by additives.

With a boiling point just above the upper limit of the temperature range within which standard use is made of the airbag module (this is conventionally a temperature of approx. +90 °C), particularly simple vaporization of the coolant may proceed when it comes into contact with the gas to be cooled which is used to inflate the airbag. If the boiling point of the coolant is for example between approx. 90 °C and approx. 100 °C, vaporization of the coolant occurs in any case upon contact with the hot gas used to inflate the airbag, and energy is thus removed from the gas used to inflate the airbag.

In one variant, the coolant is formulated to be non-flammable if oxygen is excluded from the system. In a further variant, it is also non-flammable when it is finely atomized and comes into contact with a hot gas which is used to inflate the airbag. This gas generally has a low oxygen content, for which reason numerous types of oil which may be used should also be regarded as non-flammable when finely atomized with the gas used to inflate the airbag.

In order to enable a particularly fine dispersion of the coolant in the gas to be cooled, in one variant the coolant has a surface tension at +20 °C of less than or equal to 150 mN/m, in particular of less than or equal to 100 mN/m, in particular of less than or equal to 50 mN/m and very particularly of less than or equal to 25 mN/m.

In a further development of the invention, the surface tension of the coolant is lower than the surface tension of pure water under the same conditions. In any event, this allows the coolant to be more readily dispersed in comparison with dispersing pure water.

Particularly, the cooling device is adapted to inject between 0,15 and 0,45 ml coolant per liter (I) of the airbag volume into the interior of the airbag in case the occupant occupies the seat in an intended manner. This normal seating position is to be distinguished from a so-called out-of-position situation, where the occupant is too close to the airbag and thus the risk for becoming injured due to the deploying airbag is high. In the latter situation (out-of-position situation) the cooling device is adapted to inject between 0,7 and 0,1 ml coolant per liter (I) of the airbag volume into the interior of the airbag in order to decrease the pressure in the interior of the airbag very fast.

In order to detect the position of the occupant, the distance between a body part of the occupant, for instance the head or torso of the occupant, and the airbag may be detected by a sensor. This sensor can be coupled to the cooling device, particularly to a controlling unit of the cooling device, that is configured to activate (operate) the cooling device depending on the (sensed) position of the occupant such that the above described amounts of coolant are injected into the interior of the airbag.

With respect to said distance, an out-of-position situation occurs in case the distance between said body part of the occupant and the airbag (in an not-inflated state) is below a certain pre-defined minimal distance.

The object underlying the invention is achieved with a method of cooling a gas used to inflate an airbag having the features of claim 13. In such a method, an airbag in an airbag module for a motor vehicle is inflated by a gas which is cooled by means of a coolant contained in a cooling device. In this case, the cooling device comprises a reservoir for storing the coolant that may be openable, the reservoir being opened for example during or after deployment of the airbag, such that the coolant for cooling the gas used to inflate the airbag comes into contact with this gas. The invention here provides that the coolant comprises at least one propanediol.

The inflated airbag defines an interior of the airbag that has a volume, wherein between 0,15 and 0,45 ml coolant per liter (I) of the airbag volume are injected into the interior of the airbag by the cooling device in order to cool the gases therein, when the occupant is seated in an intended (normal) position, while the cooling device is configured to inject between 0,7ml and 1,0 ml coolant per liter volume of the airbag into the interior of the airbag in case the occupant is out of position. The position of the occupant may be detected by a sensor that detects the distance between a body part of the occupant, say the head or torso of the occupant, and the (not inflated) airbag. A so-called out-of-position situation is given in case said distance is below a certain pre-defined minimal distance, for instance in case the occupant is bent towards the airbag.

With regard to further variants or developments of the method, reference is made to the above explanations of variants and developments of the airbag module, which likewise relate in a similar manner also to the claimed method.

Further details of the invention will be explained with reference to exemplary embodiments illustrated in the figures, in which:
- Fig. 1: shows a schematic sectional view through an airbag module, and
- Fig. 2: shows the amount of coolant in ml that is injected into the interior of the airbag per liter volume of the airbag.

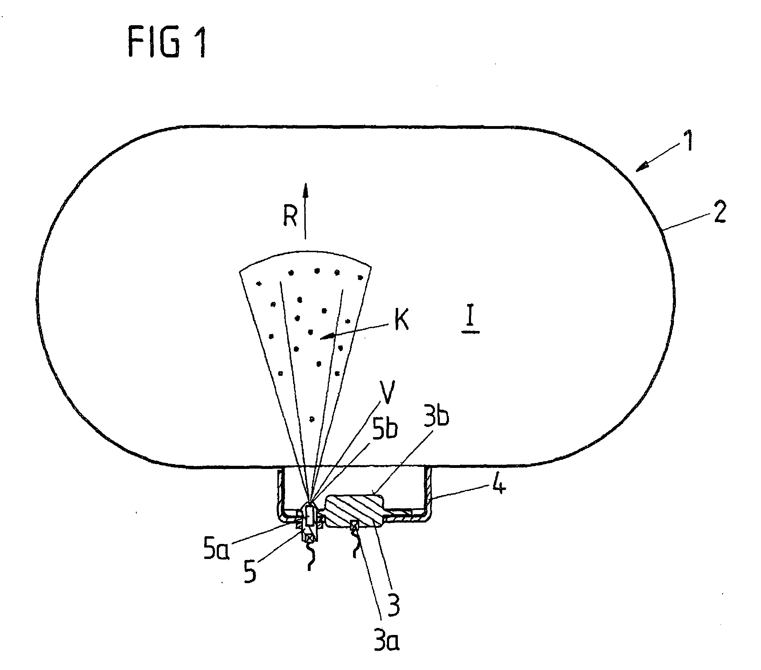

Figure 1 shows a schematic sectional view of an airbag module 1, which comprises an airbag 2, which is inflatable to protect a person, and a gas generator 3, which provides the gas needed to inflate the airbag 2. To this end, the gas generator 3 comprises a detonator 3a, which may be actuated by means of control electronics in the vehicle. The airbag 2 and the gas generator 3 of the airbag module 1 are fixed to a generator support 4, together with a cooling device 5 arranged adjacent the gas generator 3, which serves to cool the gas used to inflate the airbag 2.

The section plane of the airbag module 1 shown in Figure 1 extends - relative to a situation in which the airbag module 1 is installed in a steering wheel - parallel to a steering axle of the steering wheel (not shown).

The airbag 2 comprises an inflow opening, through which the gas from the gas generator 3 may be introduced into the interior I of the airbag 2 to inflate the airbag 2.

The cooling device 5 comprises a reservoir 5a for storing a coolant K which is liquid in the operating temperature range of the airbag module (from approx. +85 °C to approx. -40 °C), which coolant K may pass through an outflow opening 5b into the interior I of the airbag 2. The coolant K here comprises at least one cooling substance, which is selected from the group comprising monohydric alcohols, polyhydric alcohols, esters, ethers, alkanes, alkenes, alkynes and blended or unblended mineral, partially synthetic or synthetic oils. Particularly the coolant K may be a mixture of water and 1,2-propanediol (propylene glycol). When this coolant is vaporized, a toxicologically safe vapor arises, such that even in the event of skin contact with this vapor or oral intake of the vapor or of a corresponding aerosol, no harmful consequences are to be anticipated for a vehicle occupant.

The outflow opening 5b takes the form of a nozzle, such that, when the coolant K is introduced from the reservoir 5a through the outflow opening 5b in an outflow direction R into the interior I of the airbag 2, it is atomized, i.e. subdivided into small droplets.

Various methods known from the prior art may be used to force the coolant K out of the reservoir 5a of the cooling device 5. A closure V, which closes the outflow opening 5b when the airbag module has not been activated, is here always opened. This may take place for example by an overpressure generated in the reservoir 5a. It is also possible for a reversibly openable or (re)closable valve to be used as a closure V for the outflow opening 5b.

Since, at a constant volume, the pressure of the gas situated in the airbag 2 is proportional to the temperature of the gas, a reduction in the gas pressure prevailing in the airbag 2 is achieved by cooling. This means that, by means of controllable cooling of the gas situated in the airbag 2, the airbag 2 may be adapted to a specific accident situation.

The cooling effect arises in that the coolant K is atomized and vaporized by the hot gas situated in the interior I, the temperature of the gas being lowered since energy has to be applied to convert the liquid phase of the coolant into the gaseous phase, i.e. to provide the required enthalpy of vaporization.

In principle, the widest possible range of airbag designs is feasible, in which a coolant which comprises at least one propanediol may be used.

Various examples of possible coolant compositions are illustrated below in table form.

Table 1: Various mixtures of 1,2-propanediol and water which are suitable for use as a coolant in an airbag.

| Example | Water/g | 1,2-propanediol/g | Freezing point |
|---|---|---|---|
| 1 | 3.3 | 6.7 | -40°C |
| 2 | 3.6 | 6.4 | -38°C |
| 3 | 4.0 | 6.0 | -35°C |
| 4 | 5.0 | 5.0 | -30°C |

These water-1,2-propanediol mixtures each constitute 10 g of a coolant. In this case, the mass of 10 g is to be understood only as an example; a corresponding airbag module can also in each case contain a greater or lesser amount of coolant.

Table 2: Examples of water-1 ,2-propanediol-sugar mixtures which are suitable as coolant in an airbag module.

| Example | Water/g | 1,2-propanediol/g | Sugar | Freezing point |
|---|---|---|---|---|
| 1 | 3.9 | 1.5 | 4.6 | -40°C |
| 2 | 3.7 | 0.7 | 5.6 | -35°C |

The examples of water-1,2-propanediol-sugar mixtures illustrated in Table 2 each also involve 10 g of a coolant, with it also being possible for a greater or a lesser amount of a coolant to be used in an airbag module. Suitable examples of the sugar include the sugar and sugar substitutes listed further above, wherein the sugars are to be as soluble as possible in water so that the coolant constitutes a homogeneous liquid mixture which is free from solids.

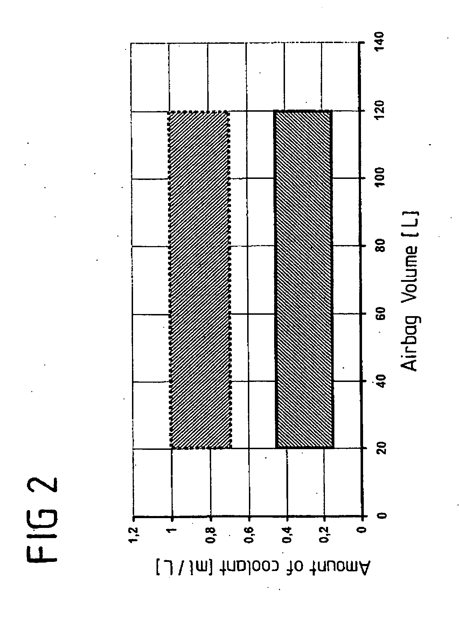

Figure 2 shows a graph that depicts the amount of coolant in ml which the cooling device 5 injects into the interior I of the airbag 2 per liter (abbreviated as L in Fig. 2) of the volume of the airbag 2. This volume is the volume of the interior I of the airbag 2 that is defined by the airbag 2.

The box in Fig. 2 having a solid outline corresponds to the amount of coolant in ml that is injected into the interior I of the airbag 2 in case the occupant is seated in an intended normal position, where, for instance, the back of the occupant abuts a backrest of the seat occupied by the occupant. In this case between 0.15ml and 0,45 ml coolant per liter (abbreviated as L in Fig. 2) of the airbag volume are injected into the interior I of the airbag 2. For example, an airbag 2 having an airbag volume of 100l will be cooled with an amount of coolant between 15ml and 45ml.

The box in Fig. 2 having a dotted outline corresponds to the amount of coolant in ml that is injected into the interior I of the airbag 2 in case the occupant is out-of-position as defined above. In this case, between 0.7ml and 1,0 ml coolant per liter of the airbag volume are injected into the interior I of the airbag 2. For example, an airbag 2 having an airbag volume of 1001 will be cooled with an amount of coolant between 70ml and 100ml.

### List of reference numerals

- 1: Airbag module
- 2: Airbag
- 3: Gas generator
- 4: Generator support
- 5: Cooling device
- 5a: Reservoir
- 5b: Outflow opening
- I: Interior of the airbag
- K: Coolant
- R: Outflow direction of the coolant
- V: Closure

## Claims

1. Airbag module for a motor vehicle, having
- an airbag (2), which is inflatable with gas to protect an occupant,
- a gas generator (3) for generating the gas provided for inflating the airbag (2), and
- an additional cooling device (5), which comprises a reservoir (5a) for storing a coolant (K), the reservoir (5a) being designed to be opened, such that the coolant (K) may come into contact with the gas used to inflate the airbag (2) to cool said gas,
**characterized in that**
the coolant (K) comprises at least one propanediol, and the inflated airbag (2) defines an interior (I) of the airbag (2) that has a volume, wherein the cooling device (5) is adapted to inject between 0,15 and 1,00 ml coolant (K) per liter of the volume of the airbag (2) into the interior (I) of the airbag (2).

2. Airbag module according to claim 1, **characterized in that** the propanediol is 1,2-propanediol.

3. Airbag module according to claim 2, **characterized in that** the coolant (K) comprises a mixture of 1,2-propanediol and water.

4. Airbag module according to claim 3, **characterized in that** the mass ratio of 1,2-propanediol to water is 0.5 to 5, in particular 0.75 to 3 and very particularly 1 to 2.5.

5. Airbag module according to one of the preceding claims, **characterized in that** the coolant (K) has at least one further substance for lowering the freezing point.

6. Airbag module according to claim 5, **characterized in that** the further substance is a sugar or a sugar substitute.

7. Airbag module according to one of the preceding claims, **characterized in that** the coolant (K) comprises an additive for reducing or preventing mist formation during vaporization of the coolant (K).

8. Airbag module according to one of the preceding claims, **characterized in that** the cooling substance exhibits properties such that inhalation of the cooling substance or of the coolant (K) by a vehicle occupant is toxicologically safe.

9. Airbag module according to one of the preceding claims, **characterized in that** the freezing point of the coolant (K) is at or below -40 °C, in particular at or below -38 °C, in particular at or below -35 °C and very particularly at or below -30 °C.

10. Airbag module according to one of the preceding claims, **characterized in that** the boiling point of the coolant (K) is at or above +90 °C, in particular at or above +95 °C, in particular at or above +100 °C, in particular at or above 105 °C and very particularly at or above +107 °C.

11. Airbag module according to one of the preceding claims, **characterized in that** the inflated airbag (2) defines an interior (I) of the airbag (2) that has a volume, wherein, in case the occupant is seated in an intended position, the cooling device (5) is adapted to inject between 0,15 and 0,45 ml coolant (K) per liter of the volume of the airbag (2) into the interior (I) of the airbag (2).

12. Airbag module according to one of the preceding claims, **characterized in that** the inflated airbag (2) defines an interior (I) of the airbag (2) that has a volume, wherein, in case the occupant is out of position, the cooling device (5) is adapted to inject between 0,7 and 0,1 ml coolant (K) per liter of the volume of the airbag (2) into the interior (I) of the airbag (2).

13. Method of cooling a gas used to inflate an airbag (2) in an airbag module (1) for a motor vehicle by means of a coolant (K), which is contained in a cooling device (5), the cooling device (5) comprising an reservoir (5a) for storing the coolant (K) and the reservoir (5a) being opened such that the coolant (K) for cooling the gas used to inflate airbag (2) comes into contact therewith, **characterized in that** the coolant (K) comprises at least one propanediol, and the inflated airbag (2) defines an interior (I) of the airbag (2) that has a volume, wherein between 0,15 and 1,0 ml coolant (K) per liter of the volume of the airbag (2) are injected into the interior (I) of the airbag (2).

14. Method according to claim 13, **characterized in that** a distance between the occupant and the airbag (2) is detected by means of a sensor coupled to the cooling device (5), wherein the cooling device (5) is adapted to inject between 0,7 and 1,0 ml coolant (K) per liter of the volume of the airbag (2) into the interior (I) of the airbag (2) in case the distance is below a certain pre-defined minimal distance

15. Method according to claim 13 or 14, **characterized in that** a distance between the occupant and the airbag (2) is detected by means of a sensor coupled to the cooling device (5), wherein the cooling device (5) is adapted to inject between 0,45 and 0,7 ml coolant (K) per liter of the volume of the airbag (2) into the interior (I) of the airbag (2) in case the distance is equal or larger than a certain pre-defined minimal distance.

## Patentansprüche

1. Airbagmodul für ein Kraftfahrzeug mit
- einem Gassack (2), der zum Schutz eines Insassen mit Gas aufblasbar ist,
- einem Gasgenerator (3) zum Erzeugen des zum Aufblasen des Gassacks (2) vorgesehenen Gases, und
- einer zusätzlichen Kühlvorrichtung (5), die ein Reservoir (5a) zum Speichern eines Kühlmittels (K) umfasst, wobei das Reservoir (5a) dazu ausgebildet ist, geöffnet zu werden, so dass das Kühlmittel (K) zum Kühlen des zum Aufblasen des Gassacks (2) verwendeten Gases im Kontakt mit diesem gelangen kann,
**dadurch gekennzeichnet, dass**
das Kühlmittel (K) zumindest ein Propandiol aufweist, und der aufgeblasene Airbag (2) einen Innenraum (I) des Airbags (2) definiert, der ein Volumen aufweist, wobei die Kühlvorrichtung (5) angepasst ist, um zwischen 0,15 und 1,00 ml des Kühlmittels (K) pro Liter des Volumens des Airbags (2) in den Innenraum (I) des Airbags (2) zu injizieren.

2. Airbagmodul nach Anspruch 1, **dadurch gekennzeichnet, dass** das Propandiol 1,2-Propandiol ist.

3. Airbagmodul nach Anspruch 2, **dadurch gekennzeichnet, dass** das Kühlmittel (K) ein Gemisch aus 1,2-Propandiol und Wasser aufweist.

4. Airbagmodul nach Anspruch 3, **dadurch gekennzeichnet, dass** das Massenverhältnis von 1,2-Propandiol zu Wasser 0,5 bis 5, insbesondere 0,75 bis 3 und ganz besonders 1 bis 2,5 beträgt.

5. Airbagmodul nach einem der vorhergehenden Ansprüche, **dadurch gekennzeichnet, dass** das Kühlmittel (K) mindestens eine weitere Substanz zur Gefrierpunktserniedrigung aufweist.

6. Airbagmodul nach Anspruch 5, **dadurch gekennzeichnet, dass** die weitere Substanz ein Zucker oder ein Zuckeraustauschstoff ist.

7. Airbagmodul nach einem der vorhergehenden Ansprüche, **dadurch gekennzeichnet, dass** das Kühlmittel (K) ein Additiv zur Verringerung oder Vermeidung einer Nebelbildung bei einer Verdampfung des Kühlmittels (K) aufweist.

8. Airbagmodul nach einem der vorhergehenden Ansprüche, **dadurch gekennzeichnet, dass** die Kühlsubstanz Eigenschaften aufweist, so dass das Einatmen der Kühlsubstanz oder des Kühlmittels (K) durch einen Fahrzeuginsassen toxikologisch sicher ist.

9. Airbagmodul nach einem der vorhergehenden Ansprüche, **dadurch gekennzeichnet, dass** der Gefrierpunkt des Kühlmittels (K) bei oder unterhalb von -40°C, insbesondere bei oder unterhalb von -38°C, insbesondere bei oder unterhalb von -35°C und ganz insbesondere bei oder unterhalb von -30°C liegt.

10. Airbagmodul nach einem der vorhergehenden Ansprüche, **dadurch gekennzeichnet, dass** der Siedepunkt des Kühlmittels (K) bei oder oberhalb von +90°C, insbesondere bei oder oberhalb von +95°C, insbesondere bei oder oberhalb +100°C, insbesondere bei oder oberhalb von +105°C und insbesondere bei oder oberhalb von +107°C liegt.

11. Airbagmodul nach einem der vorhergehenden Ansprüche, **dadurch gekennzeichnet, dass** der aufgeblasene Airbag (2) einen Innenraum (I) des Airbags (2) definiert, der ein Volumen aufweist, wobei im Falle, dass der Insasse in einer gewünschten Position sitzt, die Kühlvorrichtung (5) angepasst wird, um zwischen 0,15 und 0,45 ml des Kühlmittels (K) pro Liter des Volumens des Airbags (2) in den Innenraum (I) des Airbags (2) zu injizieren.

12. Airbagmodul nach einem der vorherigen Ansprüche, **dadurch gekennzeichnet, dass** der aufgeblasene Airbag (2) einen Innenraum (I) des Airbags (2) definiert, der ein Volumen aufweist, wobei für den Fall, dass sich der Insasse außerhalb der Position befindet, die Kühlvorrichtung (5) angepasst wird, um zwischen 0,7 und 0,1 ml Kühlmittel (K) pro Liter des Volumens des Airbags (2) in das Innere (I) des Airbags (2) zu injizieren.

13. Verfahren zur Kühlung eines zum Aufblasen eines Gassacks (2) in einem Airbagmodul (1) für ein Kraftfahrzeug verwendeten Gases mittels eines Kühlmittels (K), welches in einer Kühlvorrichtung (5) enthalten ist, wobei die Kühlvorrichtung (5) ein Reservoir (5a) zum Speichern des Kühlmittels (K) umfasst, wobei das Reservoir (5a) geöffnet wird, so dass das Kühlmittel (K) zum Kühlen des zum Aufblasen des Gassacks (2) verwendeten Gases in Kontakt mit diesem gelangt, **dadurch gekennzeichnet, dass** das Kühlmittel (K) mindestens ein Propandiol aufweist und der aufgeblasene Gassack (2) einen Innenraum (I) des Gassacks (2) definiert, der ein Volumen aufweist, wobei zwischen 0,15 und 1,0 ml Kühlmittel (K) pro Liter des Volumens des Gassacks (2) in den Innenraum (I) des Gassacks (2) injiziert werden.

14. Verfahren nach Anspruch 13, **dadurch gekennzeichnet, dass** ein Abstand zwischen dem Insassen und dem Gassack (2) mittels eines mit der Kühlvorrichtung (5) gekoppelten Sensors detektiert wird, wobei die Kühlvorrichtung (5) angepasst wird, um zwischen 0,7 und 1,0 ml Kühlmittel (K) pro Liter des Volumens des Gassacks (2) in den Innenraum (I) des Gassacks (2) in dem Fall zu injizieren, wenn der Abstand unterhalb eines bestimmten vordefinierten minimalen Abstandes ist.

15. Verfahren nach Anspruch 13 oder 14, **dadurch gekennzeichnet, dass** ein Abstand zwischen dem Insassen und dem Gassack (2) mittels eines mit der Kühlvorrichtung (5) gekoppelten Sensors detektiert wird, wobei die Kühlvorrichtung (5) angepasst ist, um zwischen 0,45 und 0,7 ml Kühlmittel (K) pro Liter des Volumens des Gassacks (2) in den Innenraum (I) des Airbags (2) in dem Fall zu injizieren, wenn der Abstand gleich oder größer als ein bestimmter vordefinierter minimaler Abstand ist.

## Revendications

1. Module de coussin de sécurité gonflable pour un véhicule automobile, comprenant :
- un coussin de sécurité gonflable (2), qui peut être gonflé au moyen d'un gaz pour protéger un passager,
- un générateur de gaz (3) pour générer le gaz fourni pour gonfler le coussin de sécurité gonflable (2), et
- un dispositif de refroidissement supplémentaire (5), qui comprend un réservoir (5a) pour stocker un réfrigérant (K), le réservoir (5a) étant conçu pour être ouvert, de sorte que le réfrigérant (K) puisse entrer en contact avec le gaz utilisé pour gonfler le coussin de sécurité gonflable (2) afin de refroidir ledit gaz,
**caractérisé en ce que**
le réfrigérant (K) comprend au moins un propanediol, et le coussin de sécurité gonflable (2) gonflé définit une partie intérieure (I) du coussin de sécurité gonflable (2) qui a un volume, dans lequel le dispositif de refroidissement (5) est adapté pour injecter entre 0,15 et 1,00 ml de réfrigérant (K) par litre du volume du coussin de sécurité gonflable (2) dans la partie intérieure (I) du coussin de sécurité gonflable (2).

2. Module de coussin de sécurité gonflable selon la revendication 1, **caractérisé en ce que** le propanediol est du propylèneglycol.

3. Module de coussin de sécurité gonflable selon la revendication 2, **caractérisé en ce que** le réfrigérant (K) comprend un mélange de propylèneglycol et d'eau.

4. Module de coussin de sécurité gonflable selon la revendication 3, **caractérisé en ce que** le rapport de masse entre le propylèneglycol et l'eau est compris entre 0,5 et 5, en particulier entre 0,75 et 3, et plus particulièrement entre 1 et 2,5.

5. Module de coussin de sécurité gonflable selon l'une des revendications précédentes, **caractérisé en ce que** le réfrigérant (K) comprend au moins une substance supplémentaire pour abaisser le point de congélation.

6. Module de coussin de sécurité gonflable selon la revendication 5, **caractérisé en ce que** la substance supplémentaire est un sucre ou un succédané de sucre.

7. Module de coussin de sécurité gonflable selon l'une des revendications précédentes, **caractérisé en ce que** le réfrigérant (K) comprend un additif pour réduire voire empêcher une formation de brouillard pendant la vaporisation du réfrigérant (K).

8. Module de coussin de sécurité gonflable selon l'une des revendications précédentes, **caractérisé en ce que** la substance de refroidissement présente des propriétés telles que l'inhalation de la substance de refroidissement ou du réfrigérant (K) par un passager du véhicule est sans risque toxicologique.

9. Module de coussin de sécurité gonflable selon l'une des revendications précédentes, **caractérisé en ce que** le point de congélation du réfrigérant (K) est inférieur ou égal à -40°C, en particulier inférieur ou égal à -38°C, en particulier inférieur ou égal à -35°C, et plus particulièrement inférieur ou égal à -30°C.

10. Module de coussin de sécurité gonflable selon l'une des revendications précédentes, **caractérisé en ce que** le point d'ébullition du réfrigérant (K) est supérieur ou égal à +90°C, en particulier supérieur ou égal à +95°C, en particulier supérieur ou égal à +100°C, en particulier supérieur ou égal à +105°C, et plus particulièrement supérieur ou égal à +107°C.

11. Module de coussin de sécurité gonflable selon l'une des revendications précédentes, **caractérisé en ce que** le coussin de sécurité gonflable (2) gonflé définit une partie intérieure (I) du coussin de sécurité gonflable (2) qui a un volume, dans lequel, dans le cas où le passager est assis dans une position prévu, le dispositif de refroidissement (5) est adapté pour injecter entre 0,15 et 0,45 ml de réfrigérant (K) par litre du volume du coussin de sécurité gonflable (2) dans la partie intérieure (I) du coussin de sécurité gonflable (2).

12. Module de coussin de sécurité gonflable selon l'une des revendications précédentes, **caractérisé en ce que** le coussin de sécurité gonflable (2) gonflé définit une partie intérieure (I) du coussin de sécurité gonflable (2) qui a un volume, dans lequel, dans le cas où le passager est hors position, le dispositif de refroidissement (5) est adapté pour injecter entre 0,7 et 0,1 ml de réfrigérant (K) par litre du volume du coussin de sécurité gonflable (2) dans la partie intérieure (I) du coussin de sécurité gonflable (2).

13. Procédé de refroidissement d'un gaz utilisé pour gonfler un coussin de sécurité gonflable (2) dans un module de coussin de sécurité gonflable (1) pour un véhicule automobile au moyen d'un réfrigérant (K), qui est contenu dans un dispositif de refroidissement (5), le dispositif de refroidissement (5) comprenant un réservoir (5a) pour stocker le réfrigérant (K) et le réservoir (5a) étant ouvert, de sorte que le réfrigérant (K) puisse entrer en contact avec le gaz utilisé pour gonfler le coussin de sécurité gonflable (2) afin de le refroidir, **caractérisé en ce que** le réfrigérant (K) comprend au moins un propanediol, et le coussin de sécurité gonflable (2) gonflé définit une partie intérieure (I) du coussin de sécurité gonflable (2) qui a un volume, dans lequel entre 0,15 et 1,0 ml de réfrigérant (K) par litre du volume du coussin de sécurité gonflable (2) sont injectés dans la partie intérieure (I) du coussin de sécurité gonflable (2).

14. Procédé selon la revendication 13, **caractérisé en ce qu'**une distance entre le passager et le coussin de sécurité gonflable (2) est détectée au moyen d'un capteur couplé au dispositif de refroidissement (5), dans lequel le dispositif de refroidissement (5) est adapté pour injecter entre 0,7 et 1,0 ml de réfrigérant (K) par litre du volume du coussin de sécurité gonflable (2) dans la partie intérieure (I) du coussin de sécurité gonflable (2) dans le cas où la distance est inférieure à une certaine distance minimale prédéfinie.

15. Procédé selon la revendication 13 ou 14, **caractérisé en ce qu'**une distance entre le passager et le coussin de sécurité gonflable (2) est détectée au moyen d'un capteur couplé au dispositif de refroidissement (5), dans lequel le dispositif de refroidissement (5) est adapté pour injecter entre 0,45 et 0,7 ml de réfrigérant (K) par litre du volume du coussin de sécurité gonflable (2) dans la partie intérieure (I) du coussin de sécurité gonflable (2) dans le cas où la distance est supérieure ou égale à une certaine distance minimale prédéfinie.
